# EUROPÄISCHE PATENTSCHRIFT

(11) **EP 0 584 473 B1**
(45) Veröffentlichungstag und Bekanntmachung des Hinweises auf die Patenterteilung: **16.10.1996**
(21) Anmeldenummer: 93109477.5
(22) Anmeldetag: 14.06.1993
(51) Int. Cl.: A01F 15/10

(54) **Rundballenpresse**
Round baler
Presse à balles rondes

(30) Priorität: 21.08.1992 DE 9211281 U
(43) Veröffentlichungstag der Anmeldung: 02.03.1994
(73) Patentinhaber: GREENLAND GMBH & CO. KG, D-78244 Gottmadingen (DE)
(72) Erfinder: Schmidt, Hubertus, D-78244 Gottmadingen (DE); Schaible, Siegfried, D-78244 Singen/Htwl. (DE); Schneble, Edwin, D-78262 Gailingen (DE)
(74) Vertreter: Grünecker, Kinkeldey, Stockmair & Schwanhäusser Anwaltssozietät

(56) Entgegenhaltungen:
- WO-A-92/09191
- FR-A- 2 048 114
- GB-A- 2 181 075

## Beschreibung

Die Erfindung betrifft eine Rundballenpresse der im Oberbegriff des Patentanspruchs 1 angegebenen Art.

Bei einer aus der Praxis bekannten Rundballenpresse dieser Art ist die Abstreiffläche nahezu vollständig innerhalb der Umlaufbahn der Mitnehmer der Förderwalze angeordnet. Die Schneidkanten der Messer liegen relativ nahe am Grundkörper der Förderwalze. Der radiale Abstand zwischen der Drehachse der Förderwalze und der Schneidkante jedes Messers nimmt in Umlaufrichtung der Mitnehmer ab. Die Abstreiffläche hat die Aufgabe, das von den Mitnehmern zur Preßkammer geförderte Halmgut, das entlang den Messern geschnitten wird, von den Mitnehmern abzustreifen, damit es in die Preßkammer und in den darin gewickelten Rollballen gelangt und nicht von den Mitnehmern zurück in den Förderkanal gebracht wird. Ferner bildet die Abstreiffläche ein Widerlager beim Schnitt des Halmguts an den Messern. Da die Abstreiffläche deutlich vom Umfang des Rollballens in der Preßkammer beabstandet ist, bleibt das geschnittene Halmgut zwischen der Abstreiffläche und dem Umfang des Rundballens sich selbst überlassen. Es wird dadurch manchmal nur stockend vom Rundballen mitgenommen. Ferner führt die Anordnung und Ausbildung der Abstreiffläche zu dem Nachteil, daß bei manchen Halmgutarten oder bestimmten Feuchtegraden des Halmguts Verstopfungen auftreten, weil das Halmgut nicht zügig dem Rundballen zugeführt wird, sondern sich in dem freien Rum beim oberen Endbereich der Abstreiffläche staut. Dies führt dann zum Blockieren der Förderwalze, deren Mitnehmer letztendlich den Widerstand des gestauten Halmguts nicht mehr überwinden. Die Beseitigung einer solchen Störung ist mühsam und zeitaufwendig.

Bei einer aus WO 92/09191 bekannten Rundballenpresse sind sichelförmige Abstreiforgane im Verlauf des Zuführkanals zur Preßkammer vorgesehen, die den Umfang des Grundkörpers der Förderwalze mit ihren Spitzen berühren und ihre außenliegenden, konvexen Abstreifflächen annähernd parallel zum gekrümmten Verlauf des Förderkanals halten.

Bei einer aus FR-A-2 048 114 bekannten Aufnahevorrichtung für einen Ladewagen sind Abstreifer in Umlaufrichtung der Mitnehmer hinter den Schneiden der Messer angeordnet.

Bei einer aus GB-A-2 181 075 bekannten Aufnahmevorrichtung eines Ladewagens sind Abstreifvorrichtungen der Mitnehmer der Förderwalze entfernt von den mit den Mitnehmern zusammenarbeitenden Messern gehaltert. Eine gemeinsame Zusammenarbeit der Messer, der Mitnehmer und der Abstreifvorrichtung ist nicht gegeben.

Der Erfindung liegt die Aufgabe zugrunde, eine Rundballenpresse der eingangs genannten Art zu schaffen, bei der auch bei unterschiedlichen Halmgutarten und unterschiedlichen Feuchtegraden des Halmguts Zufünrstaus zuverlässig vermieden werden.

Die gestellte Aufgabe wird erfindungsgemäß mit den im Patentanspruch 1 angegebenen Merkmalen gelöst.

Die Abstreiffläche ist so weit in die Preßkammer hinein verlagert, daß geschnittenes und ungeschnittenes Halmgut vom rotierenden Rundballen direkt abgestreift oder übernommen wird. Das Halmgut bleibt im Bereich zwischen der Abstreiffläche und dem umfang des Rundballens nicht sich selbst überlassen, sondern wird mit der noch vom Schnitt und der Förderung durch die Mitnehmer wirkenden Bewegungsenergie zügig in den Rundballen eingearbeitet, der mit seinem Umfang das noch nicht zur Ruhe gekommene Halmgut übernimmt und abtransportiert. Es ergeben sich durch die spezielle Lage der Abstreiffläche günstigere Schnittbedingungen an den Messern. Selbst bei schwierig zu verarbeitenden Halmgutarten und bei unterschiedlichen Feuchtegraden tritt keine Verstopfung oder Zuführstau mehr auf. Die Aufnahmeleistung der Rundballenpresse wird gegenüber den bekannten vergleichmäßigt und gesteigert.

Bei der Ausführungsform gemäß Anspruch 2 wird das Halmgut dank der Krümmung der Abstreiffläche besonders zügig und staufrei abgestreift.

Zum verbesserten Abstreifen des Halmguts und zu günstigen Schnittbedingungen führt ferner die Ausführungsform gemäß Anspruch 3. Die Tendenz der Mitnehmer, Halmgut in die Durchgangsschlitze mitzuschleppen, wird stark abgeschwächt. Es gleitet das Halmgut ganz leicht entlang der Abstreiffläche, wenn sich die Mitnehmerkante nahezu tangential zur Abstreiffläche bewegt. Ist der Winkel größer als 90°, dann wird das Halmgut von den Mitnehmern sogar von der Abstreiffläche weg verlagert.

Eine wichtige Ausführungsform geht aus Anspruch 4 hervor. Durch diese Anstellung der Schneiden der Messer wird ein langziehender Schnitt am Halmgut erreicht, so daß das Halmgut zuverlässig geschnitten und am Verhängen an den Messerschneiden gehindert wird. In Förderrichtung des Halmguts ergibt sich ein relativ langer Abstützbereich an der Abstreiffläche, der eine lokale Bündelung oder Kompression des Halmguts beim oder vor dem Schnitt vermeidet. Auch ist der Bewegungswiderstand des Halmguts entlang den Messerschneiden verringert, so daß sich das Halmgut zügig entlang der Messer und dann weiter entlang der Abstreiffläche direkt zum Rundballen bewegt.

Wichtig ist ferner die Ausführungsform gemäß Anspruch 5, weil der untere Endbereich der Abstreiffläche sozusagen im Schatten der Förderwalze liegt, so daß auch hier ein Stau vermieden wird.

Ein weiteres wichtiges Merkmal ist in Anspruch 6 enthalten. Die Freifläche stellt sicher, daS der obere Endbereich der Abstreiffläche nicht in die Umfangsfläche des Rundballens gräbt und auch kein bereits eingearbeitetes Halmgut aus dem Rundballen herauslöst.

Wichtig ist ferner die Ausführungsform von Anspruch 7. Durch die Erweiterung wird zusätzlicher Freiraum für Halmgut geschaffen, das der Rundballen beim Vorbeistreichen leicht mitnimmt. Es sind vorstehende Kanten oder sonstige Bewegungshindernisse vermieden, damit weder Halmgut aus dem Rundballen gerissen noch bereitliegendes Halmgut am Mitgehen gehindert wird.

Eine baulich einfache und zweckmäßige Ausführungsform geht aus Anspruch 8 hervor. Sollte aufgrund eines mitgenommenen Steines oder eines anderen Objekts ein Abstreifer beschädigt oder deformiert sein, dann läßt er sich problemlos und rasch auswechseln. Die anderen Abstreifer können weiter benutzt werden. Die Abstreifer sind, z.B., angeschraubt, angenietet oder angeschweißt.

Eine alternative und einfachere Ausführungsform geht aus Anspruch 9 hervor. Ein einstückiger Abstreifer ist montage- und herstellungstechnisch günstig.

Bei der Ausführungsform gemäß Anspruch 10 hat der Steg eine Mehrfachfunktion. Er dient zur Aussteifung der Abstreiffläche gegen die beim Abstreifen und Schneiden des Halmguts auftretenden Kräfte. Er hat eine Halmgut-Abweisefunktion, die die Gefahr beseitigt, daß durch die Durchgangsschlitze geratendes Halmgut sich um den Abstreifer schlingt und eine Betriebsstörung hervorruft. Es können zwischen jeweils zwei Durchgangsschlitzen auch mehrere Stege vorgesehen sein. Denkbar ist es ferner, die Abweisekante mit zusätzlichen baulichen Mitteln zu modifizieren, so daß das Halmgut mit Nachdruck am Umwickeln des Abstreifers gehindert wird.

Eine weitere, vorteilhafte Ausführungsform, bei der in der Preßkammer oberhalb der Abstreifvorrichtung wenigstens eine am Umfang des Rundballens anliegende Preßwalze vorgesehen ist, geht aus Anspruch 11 hervor. Der Querträger leitet die auf die Abstreiffläche ausgerichteten Kräfte auf baulich einfache Weise in das Gehäuse. Er steift die Abstreiffläche in Querrichtung aus und stützt sie gegen eine Verdrehung unter der Kraft des Halmguts. Schließlich hält der Querträger den Raum unterhalb der Preßwalze von entlang der Abstreiffläche zugeführtem Halmgut frei.

Eine montagetechnisch einfache und zweckmäßige Ausführungsform geht aus Anspruch 12 hervor. Der Abstreifer läßt sich am Querträger in Hochrichtung verstellen. Ferner kann die Verstellung dienen, den Spalt zwischen dem unteren Endbereich der Abstreiffläche und dem Grundkörper der Förderwalze auf ein optimales Maß einzustellen.

Ein weiteres, wichtiges Merkmal ist in Anspruch 13 enthalten. Durch die Distanzbleche läßt sich die Lage der Abstreiffläche in Relation zum Querträger in einer weiteren Richtung im Hinblick auf ein optimales Arbeitsverhältnis verändern.

Sind gemäß Anspruch 14 die Distanzbleche keilförmig, dann kann die Anstellung der Abstreiffläche in Relation zum Querträger verändert werden, wobei durch Verdrehen der Distanzbleche um 180° zwei unterschiedliche Anstellwinkel der Abstreiffläche erreichbar sind, und durch Weglassen der Distanzbleche ein dritter Anstellwinkel realisierbar ist.

Bei der Ausführungsform gemäß Anspruch 15 hat der Querträger eine zusätzliche Funktion, da er mit seiner Abstreifkante das Mitnehmen von Halmgut durch die Preßwalze unterbindet.

Montagetechnisch ist die Ausführungsform gemäß Anspruch 16 zweckmäßig, weil sich eine stabile Position des Querträgers in der Preßkammer ergibt, und der Querträger zur Veränderung des Abstreifspalts und der Positionierung der daran befestigten Abstreiffläche verstellbar ist.

Bei der Ausführungsform gemäß Anspruch 17 wird durch die gleitfreudige Beschichtung ein geringer Gleitwiderstand des Halmguts an der Abstreiffläche erreicht, was bei schwierig zu verarbeitenden Halmgutarten oder kritischen Feuchtegraden von Vorteil ist.

Anhand der Zeichnung werden Ausführungsformen des Erfindungsgegenstandes erläutert. Es zeigen:
- Fig. 1: eine schematische Seitenansicht einer Rundballenpresse,
- Fig. 2: einen Querschnitt eines Teils der Rundballenpresse von Fig. 1,
- Fig. 3: eine Perspektivansicht einer Ausführungsvariante, passend zur Ansicht von Fig. 2, und
- Fig. 4: eine Perspektivansicht einer anderen Ausführungsvariante, ebenfalls passend zur Ansicht von Fig. 2.

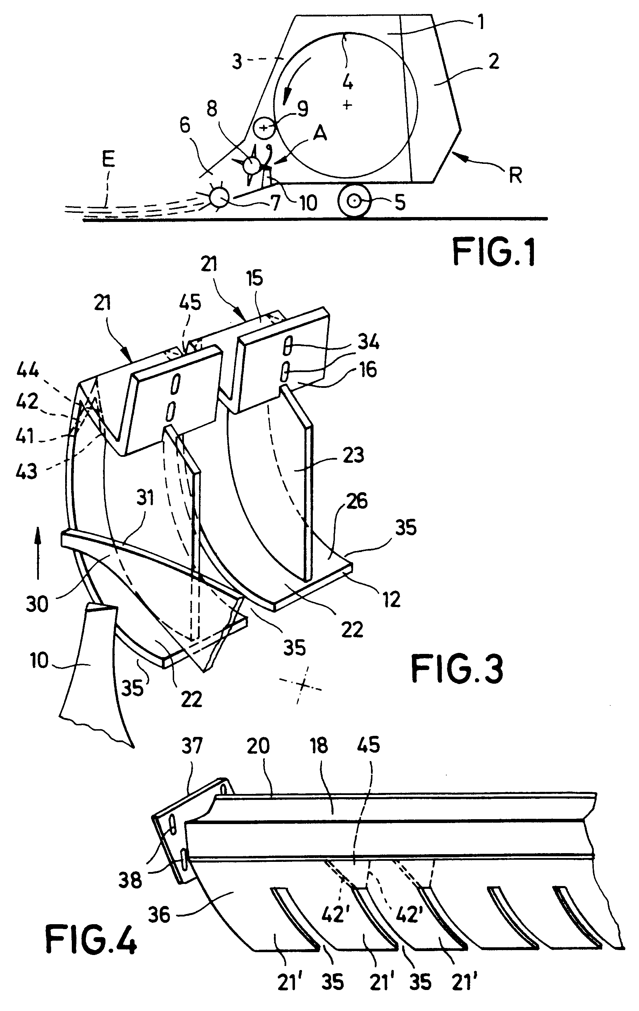

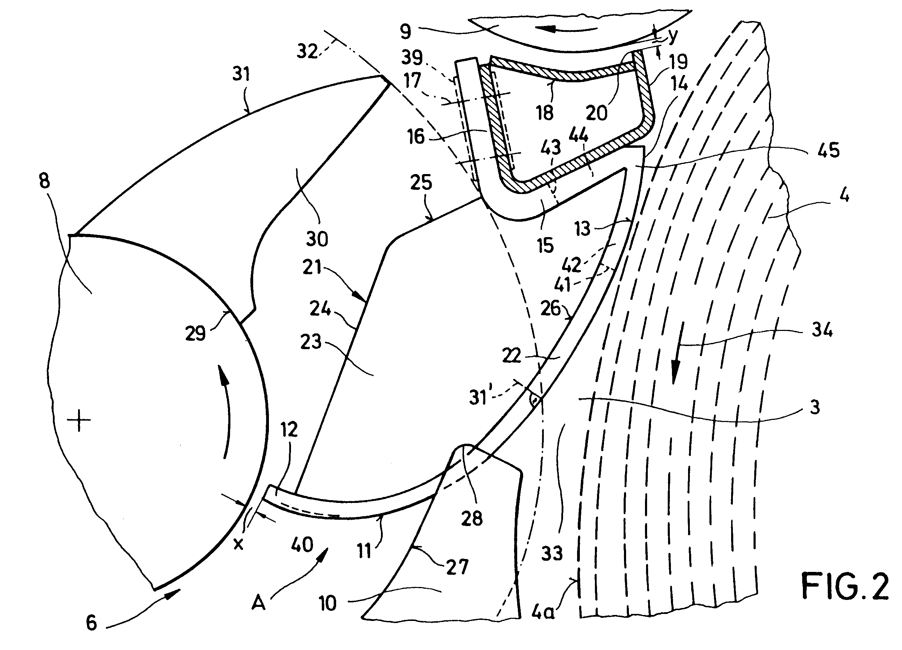

Eine Rundballenpresse R gemäß Fig. 1 weist ein auf Rädern 5 schleppbares Gehäuse 1 mit einer zum Auswerfen eines Rundballens 4 zu öffnenden Heckklappe 2 auf. Der Rundballen 4 wird in einer innenliegenden Preßkammer 2 durch Wickeln und Pressen aus vom Boden aufgenommenem Halmgut E gebildet. Das Halmgut E gelangt in die Preßkammer 3 durch einen Zuführkanal 6, an dessen Beginn eine herkömmliche Pick-up-Vorrichtung 7 angeordnet ist. Im Verlauf des Zuführkanals ist eine unterschlächtig arbeitende, angetriebene Förderwalze 8 vorgesehen, die mit von unten nach oben ragenden Messern 10 zusammenarbeitet und das Halmgut E schneidet, ehe es in die Preßkammer 3 gelangt. Eine Abstreifvorrichtung A dient zum Abstreifen des Halmguts zu dessen Überführung in die Preßkammer 3. Oberhalb der Abstreifvorrichtung A ist eine angetriebene Preßwalze 9 vorgesehen, die am Umfang des Rundballens 4 anliegt. Die Wickelrichtung des Rundballens ist in Fig. 1 entgegen dem Uhrzeigersinn.

Anhand von Fig. 2 wird die Zusammenarbeit zwischen der Förderwalze 8, den Messern 10 und der Abstreifvorrichtung A und der Detailaufbau erläutert. Die Förderwalze 8 rotiert entgegen dem Uhrzeigersinn, wie auch die Preßwalze 9. Die Messer 10 sind stationär angeordnet. Der Rundballen 4, dessen Umfang mit 4a angedeutet ist, rotiert - wie gesagt - entgegen dem Uhrzeigersinn (Pfeil 34).

Die Abstreifvorrichtung A weist eine von unten nach oben schräg zum Rundballen hin verlaufende Abstreiffläche 11 auf, deren unterer Endbereich 12 dem Grundkörper der Förderwalze 8 mit einem Spalt x benachbart ist, der wegen eines dann erreichbaren Selbstreinigungseffekts zwischen ca. 3 und ca. 4mm betragen sollte. Die Abstreiffläche ist zur Preßkammer 3 hin konvex gekrümmt, wobei der Krümmungsradius beim unteren Endbereich 12 am kleinsten ist und bis zum oberen Endbereich 13 allmählich zunimmt. An den oberen Endbereich 13, der gegebenenfalls am Umfang 4a des Rundballens 4 anliegt, schließt sich eine Freifläche 14 an, die vom Umfang 4a des Rundballens 4 nach oben wegstrebt. Die Abstreiffläche 11 ist an einem bogenförmigen Blechkörper 22 vorgesehen, der oben mit einem winkelförmigen Befestigungsprofil 15 verbunden ist. Ein Befestigungsschenkel 16 ist mit Befestigungsschrauben 17 an einem Hochschenkel eines Querträgers 18 festgeschraubt, der sich unterhalb der Preßwalze 9 in Querrichtung erstreckt und im Gehäuse 1 der Rundballenpresse R befestigt ist. An einem dem Rundballen 4 zugewandten Hochschenkel 19 des Querträgers 18 ist eine Abstreifkante 20 vorgesehen, die mit dem Umfang der Preßwalze 9 einen Abstreifspalt Y begrenzt, dessen Weite einstellbar ist.

An der der Abstreiffläche 11 abgewandten Vorderfläche 26 des Blechkörpers 22 ist wenigstens ein vertikaler Steg 23 vorgesehen, der sich über die Höhe der Abstreiffläche 11 erstreckt und den Blechkörper 22 aussteift. Der Steg 23 dient ferner als Halmgutabweiser und verhindert, daß sich von der Förderwalze 8 durch die Abstreiffläche 11 hindurch mitgenommenes Halmgut verhängt. Der Steg 23 besitzt eine etwa radial zur Drehachse der Förderwalze 8 verlaufende Abweisekante 25, die mit einer nach unten verlaufenden weiteren Abweisekante 24 einen stumpfen Winkel bildet.

Die Abstreiffläche 11 der Rundballenpresse R wird von den Rückenflächen mehrerer Abstreifer 21 (Fig. 3) gebildet, die mit Durchgangsschlitze 35 begrenzenden Zwischenabständen nebeneinanderliegend am Querträger 18 befestigt, z.B. angeschraubt, angeschweißt oder angenietet sind. Für die übliche Breite eines Rundballens von 1,20m sind vierzehn Messer 10 und vierzehn Mitnehmer 30 an der Förderwalze 8 vorgesehen. Dementsprechend sind fünfzehn oder dreizehn Abstreifer 21 am Querträger 18 angebracht. Zur Befestigung jedes Abstreifers 21 sind bei der gezeigten Ausführung im Befestigungsflansch 16 mittig zwei übereinanderliegende Langlöcher 34 für Spannschrauben vorgesehen. Fig. 3 verdeutlicht ferner, wie jedes Messer 10 in einen Durchgangsspalt 35 greift und wie sich ein Mitnehmer 30 durch den Durchgangsspalt hindurchbewegt, wobei zweckmäßigerweise die in Drehrichtung der Förderwalze 8 voreilende Mitnehmerkante 31 im Eintrittspunkt der freien Spitze des Mitnehmers 30 in den Durchgangsschlitz 35 zur Abstreiffläche 11 unter einem Winkel von 90° oder mehr angestellt ist.

Die Abstreifer 21 können (in Fig. 2 und 3 strichliert angedeutet) beim oberen Endbereich 13 der Abstreiffläche 11 angespitzt sein, so daß jeder Durchgangsspalt oben eine sich entgegen der Wickelrichtung 34 öffnende keilförmige Erweiterung 45 erhält. Diese schafft zum Vermeiden von Staus des Halmguts E wichtige Freiräume benachbart zum Umfang 4a des Rundballens 4. Gemäß den Fig. 2, 3 beginnt die Anspitzung jeweils bei 4' an jedem Rand des Blechkörpers 22 und bei 43 im Befestigungsprofil 15. Sie setzt sich entlang der Flächen 42, 44 über ca. 5 bis 7cm Höhe bis zu einem Kennpunkt an der Endkante der Freifläche 14 fort. Scharfe Kanten sind vermieden. In Wickelrichtung 34 sind vom Hochschenkel 19 des Querträgers 18 über dessen gerundete untere Kante, entlang der Freifläche 19 und in den Erweiterungen 45 fließende, glatte Üergänge gebildet. Die Erweiterungen 45 könnten auch gerundet sein, wie auch die bei 41 und 43 angedeuteten Bereiche.

Fig. 4 verdeutlicht eine alternative Ausführungsform, bei der ein einstückiger querverlaufender Abstreifer 36 (Blechformteil) am Querträger 18 in der in Fig. 2 gezeigten Weise befestigt ist. Der Abstreifer 36 besitzt durch die Durchgangsspalte 35 voneinander getrennte schaufelartige Blechkörper 21', deren Ruckenflächen die Abstreiffläche 11 definieren. Gemäß Fig. 4 ist am Querträger 18 endseitig je eine Befestigungsplatte 37 angebracht, in der vertikale oder leicht schräg angestellte Langlöcher 38 vorgesehen sind. Mit den Tragplatten 37 wird der Querträger 18 im Gehäuse 1 der Rundballenpresse festgelegt. Im Bereich der Langlöcher 38 läßt er sich zur Verstellung des Abstreifspalts Y oder zur Einstellung der Lage der Abstreiffläche 11 verstellen. In den Durchgangsspalten 35 sind keilförmige Erweiterungen 45 strichliert angedeutet.

Gemaß Fig. 2 sind an der Förderwalze 8 an deren Grundkörper 29 mehrere Mitnehmer 30 angebracht, wobei in Fig. 2 nur ein Mitnehmer 30 dargestellt ist. Der Mitnehmer 30 besitzt die in Drehrichtung vorneliegende Mitnehmerkante 31. Die Umlaufbahn der freien Mitnehmerenden ist mit 32 strichliert angedeutet. Die Messer 10 ragen von unten nach oben in die Umlaufbahn der Mitnehmer 30, derart, daß ihre Schneiden 27 in Förderrichtung des Halmguts zur Preßkammer 30 allmählich vom Umfang des Grundkörpers 29 weg verlaufen. Der Radialabstand zwischen der Drehachse der Förderwalze 8 und der Schneide 27 nimmt in Umlaufrichtung der Förderwalze 8 allmählich zu. Das mit 28 bezeichnete freie Ende jedes Messers ragt in den Durchgangsspalt 35 der Abstreiffläche 11. Bei 31' ist angedeutet, wie die Mitnehmerkante 31 am Eintrittspunkt des freien Endes des Mitnehmers 30 in den Durchgangsspalt annähernd senkrecht zur Abstreiffläche steht. Dies ist so zu verstehen, daS eine Tangente an die Mitnehmerkante 31 im Eintrittspunkt in den Durchgangsspalt 35 mit einer Tangente an der Abstreiffläche 11 m Eintrittspunkt einen Winkel von 90° oder mehr einschließt. Die Abstreiffläche 11, die mit ihrem oberen Endbereich 13 so weit in die Preßkammer 3 hineinversetzt ist, daß sie den Umfang 4a des Rundballens 4 berührt oder nahezu berührt, begrenzt mit dem Umfang 4a einen sich in Wickelrichtung 34 des Rundballens öffnenden, spitzwinkligen Abgabespalt 33, in dem der Rundballen 4 das geschnittene und ungeschnittene Halmgut direkt von der Abstreiffläche 11 übernimmt.

Zum Verändern der relativen Position der Abstreiffläche 11 in bezug auf den Querträger 18 und die Förderwalze 8 können Distanzbleche 39 (strichliert angedeutet) vorgesehen sein, die zwischen dem Befestigungsflansch 16 und dem Gegenflansch des Querträgers 18 eingelegt werden. Diese Distanbleche 39 können auch keilförmig sein, um zwei unterschiedliche Anstellwinkel für die Abstreiffläche 11 realisieren zu können bzw. den Spalt X zwischen dem unteren Endbereich 12 und dem Grundkörper 21 der Förderwalze 8 genau einstellen zu können. Ferner kann die Abstreiffläche 11 mit einer gleitfreudigen Beschichtung 40 versehen sein, z.B. aus PTFE.

Zweckmäßigerweise ist zwischen je zwei benachbarten Durchgangsschlitzen 35 ein vertikaler Steg 23 vorgesehen. Es wäre aber auch denkbar, zwei oder mehr solcher Stege zur Aussteifung und zum Halmgutabweisen vorzusehen. Die Abstreifer 21 könnten auch an der Unterseite des Querträgers 18 verstellbar und lösbar festgelegt sein. Der Hochschenkel 19 des Querträges 18 ist geringfügig schräggestellt, so daß oberhalb der Abstreiffläche 11 ein zwickelförmiger Freiraum entsteht, in dem sich gegebenfalls lösendes Halmgut aus dem Rundballen 4 ohne spürbaren Bewegungswiderstand nach unten und entlang der Freifläche 14 wieder in den Rundballen 4 geleitet wird.

## Patentansprüche

1. Rundballenpresse für Halmgut, mit einer Preßkammer (3), mit einem in die Preßkammer führenden Zurührkanal (6), mit einer Mitnehmer (30) tragenden, unterschlächtig angetriebenen Förderwalze (8) im Zuführkanal, mit zwischen der Förderwalze (8) und der Preßkammer (3) von unten in den Drehbereich der Mitnehmer (30) greifenden Messern (10), und mit einer oberhalb der Messer (10) abgestützten Abstreifvorrichtung (A), die der Preßkammer (3) zugewandt eine von unten schräg nach oben zur Preßkammer geneigte, Durchgangsschlitze (35) für die Mitnehmer (30) und die Messer (10) enthaltende Abstreiffläche (11) aufweist, die von oben in den Drehbereich der Mitnehmer (30) ragt, **dadurch gekennzeichnet**, daß sich der obere Endbereich (13) der Abstreiffläche (11) in der Preßkammer (3) unter Bildung eines sich in Wickelrichtung des Rundballens (4) spitzwinklig öffnenden Abgabespalts (33) bis zum Umfang (4a) des in der Preßkammer (3) gewickelten Rundballens (4) erstreckt.

2. Rundballenpresse nach Anspruch 1, **dadurch gekennzeichnet**, daß die Abstreiffläche (11) der Preßkammer (3) zugewandt von unten nach oben konkav gekrümmt ist, und daß der Krümmungsradius von unten nach oben zunimmt.

3. Rundballenpresse nach den Ansprüchen 1 und 2, **dadurch gekennzeichnet**, daß jeder Mitnehmer (30) eine in Drehrichtung der Förderwalze (8) vorne liegende Mitnehmerkante (31) aufweist, und daß die Krümmung der Abstreiffläche (11) und der Verlauf der Mitnehmerkante (31) relativ zur Drehachse der Förderwalze (8) derart aufeinander abgestimmt sind, daß am Eintrittspunkt der freien Spitze des Mitnehmers (30) in den Durchgangsschlitz (35) eine Tangente an die Mitnehmerkante (31) mit einer Tangente an die Abstreiffläche (11) einen Winkel von mindestens 90° einschließt.

4. Rundballenpresse nach Anspruch 1, **dadurch gekennzeichnet**, daß der Radialabstand der Schneide (27) jedes Messers (10) von der Drehachse der Förderwalze (8) in Drehrichtung der Förderwalze (8) zumindest bis zum Eintrittspunkt des Messers (10) in den Durchgangsschlitz (35) gleich bleibt, vorzugsweise allmählich zunimmt.

5. Rundballenpresse nach Anspruch 1, **dadurch gekennzeichnet**, daß der untere Endbereich (12) der Abstreiffläche (11) in Zuführrichtung des Ernteguts (E) von der Umfangskontur der Förderwalze (8) abgedeckt ist.

6. Rundballenpresse nach Anspruch 1**, dadurch gekennzeichnet**, daß im Anschluß an den oberen Endbereich (13) der Abstreiffläche (11) eine vom Umfang (4a) des Rundballens (4) zurücktretende Freifläche (14) vorgesehen ist.

7. Rundballenpresse nach einem der Ansprüche 1 bis 6,**dadurch gekennzeichnet**, daß in jedem Durchgangsschlitz (35) im oberen Endbereich (13) der Abstreiffläche (11) eine sich entgegen der Wickelrichtung (34) öffnende keilförmige Erweiterung (45) vorgesehen ist.

8. Rundballenpresse nach wenigstens einem der Ansprüche 1 bis 7, **dadurch gekennzeichnet**, daß die Abstreiffläche (11) von den Rückenflächen mehrerer mit die Durchgangsschlitze (35) definierenden Zwischenabständen nebeneinanderliegender Abstreifer (21) gebildet ist.

9. Rundballenpresse nach wenigstens einem der Ansprüche 1 bis 8, **dadurch gekennzeichnet**, daß die Abstreiffläche (11) von der Rückenfläche eines die Durchgangsschlitze (35) enthaltenden einstückigen Abstreifers (36) gebildet ist.

10. Rundballenpresse nach wenigstens einem der Ansprüche 1 bis 9, **dadurch gekennzeichnet**, daß am Abstreifer (21, 36) an der Vorderfläche (26) zwischen zwei benachbarten Durchgangsschlitzen (35) wenigstens ein vertikaler Steg (23) vorgesehen ist, und daß sich der Steg (23) als Halmgutabweiser über die Höhe der Abstreiffläche (11) erstreckt und eine verbreiterte Abweisekante (25) aufweist, die sich annähernd radial zur Achse der Förderwalze (8) bis annähernd zur Hälfte der radialen Höhe jedes Mitnehmers (30) in Richtung zur Förderwalze (8) erstreckt.

11. Rundballenpresse nach wenigstens einem der Ansprüche 1 bis 10, wobei in der Preßkammer oberhalb der Abstreifvorrichtung wenigstens eine am Umfang des Rundballens anliegende Preßwalze vorgesehen ist, **dadurch gekennzeichnet**, daß der Abstreifer (21, 36) an einem obenliegenden, der Preßwalze (9) benachbarten Querträger (18) befestigt ist.

12. Rundballenpresse nach Anspruch 11, **dadurch gekennzeichnet**, daß der Abstreifer (21, 36) über wenigstens ein vertikales Langloch (34) an einem der Förderwalze (8) zugewandten Schenkel des Querträgers (18) in Hochrichtung verstellbar befestigt ist.

13. Rundballenpresse nach den Ansprüchen 11 und 12, **gekennzeichnet** **durch** zwischen einem Befestigungsschenkel (16) des Abstreifers (21, 36) und dem Schenkel des Querträgers (18) einlegbare Distanzbleche (39).

14. Rundballenpresse nach Anspruch 13, **dadurch gekennzeichnet**, daß die Distanzbleche (39) keilförmigen Querschnitt besitzen.

15. Rundballenpresse nach Anspruch 11, **dadurch gekennzeichnet**, daß der Querträger (18) an einem dem Rundballen (4) zugewandten Schenkel (19) eine Abstreifkante (20) aufweist, die mit dem Umfang der Preßwalze (9) einen Abstreifspalt (Y) begrenzt.

16. Rundballenpresse nach Anspruch 15, **dadurch gekennzeichnet**, daß der Querträger (18) an endseitigen Tragplatten (37) festgelegt ist, in denen vertikale oder schräg verlaufende Langlöcher (38) zur Verstellung des Abstreifspalts vorgesehen sind.

17. Rundballenpresse nach wenigstens einem der Ansprüche 1 bis 16, **dadurch gekennzeichnet**, daß die Abstreiffläche (11) eine gleitfreudige Beschichtung (40), z.B. aus PTFE, trägt.

## Claims

1. Rolled bale press for stalk material, including a press chamber (3), a supply passage (6) extending into the press chamber, a conveyor roller (8) in the supply passage, which roller is provided with entrainment means (30) and is driven in an undershot manner, cutters (10), which engage from below within the rotational range of the entrainment means (30) between the conveyor roller (8) and the press chamber (3), and a scraping device (A), which is supported above the cutters (10) and has a scraping face (11) facing the press chamber (3), which face is inclined inclinedly upwardly from below relative to the press chamber and contains through-slots (35) for the entrainment means (30) and the cutters (10), said scraping face protruding from above within the rotational range of the entrainment means (30), characterised in that the upper end region (13) of the scraping face (11) extends in the press chamber (3) to the circumference (4a) of the rolled bale (4), which is rolled in the press chamber (3), so as to form a discharge gap (33), which opens at an acute angle when viewed with respect to the rolling direction of the rolled bale (4).

2. Rolled bale press according to claim 1, characterised in that the scraping face (11) facing the press chamber (3) is concavely curved upwardly from below, and in that the radius of curvature increases upwardly from below.

3. Rolled bale press according to claims 1 and 2, characterised in that each entrainment means (30) has an entrainment edge (31), which lies at the front when viewed with respect to the direction of rotation of the conveyor roller (8), and in that the curvature of the scraping face (11) and the configuration of the entrainment edge (31) relative to the axis of rotation of the conveyor roller (8) are adapted to each other in such a manner that a tangent to the entrainment edge (31) with a tangent to the scraping face (11) forms an angle of at least 90° at the point where the free tip of the entrainment means (30) enters the through-slot (35).

4. Rolled bale press according to claim 1, characterised in that, when viewed with respect to the direction of rotation of the conveyor roller (8), the radial spacing between the blade (27) of each cutter (10) and the axis of rotation of the conveyor roller (8) remains the same, and preferably gradually increases, at least up to the point where the cutter (10) enters the through-slot (35).

5. Rolled bale press according to claim 1, characterised in that the lower end region (12) of the scraping face (11) is covered by the circumferential configuration of the conveyor roller (8), when viewed with respect to the supply direction of the harvested material (E).

6. Rolled bale press according to claim 1, characterised in that a free face (14), which stands back from the circumference (4a) of the rolled bale (4), is provided so as to communicate with the upper end region (13) of the scraping face (11).

7. Rolled bale press according to one of claims 1 to 6, characterised in that a wedge-shaped widened portion (45), which opens in opposition to the rolling direction (34), is provided in each through-slot (35) in the upper end region (13) of the scraping face (11).

8. Rolled bale press according to at least one of claims 1 to 7, characterised in that the scraping face (11) is formed by the rear faces of a plurality of scrapers (21), which lie adjacent one another with intermediate spacings therebetween, which spacings define the through-slots (35).

9. Rolled bale press according to at least one of claims 1 to 8, characterised in that the scraping face (11) is formed by the rear face of an integral scraper (36), which contains the through-slots (35).

10. Rolled bale press according to at least one of claims 1 to 9, characterised in that at least one vertical web (23) is provided on the scraper (21, 36) on the front face (26) between two adjacent through-slots (35), and in that, as the means for deflecting the harvested material, the web (23) extends above the height of the scraping face (11) and has a widened deflecting edge (25), which extends approximately radially relative to the axis of the conveyor roller (8) to approximately half the radial height of each entrainment means (30) in the direction of the conveyor roller (8).

11. Rolled bale press according to at least one of claims 1 to 10, wherein at least one press roller, abutting against the circumference of the rolled bale, is provided in the press chamber above the scraping device, characterised in that the scraper (21, 36) is mounted on an upper cross-piece member (18) adjacent the press roller (9).

12. Rolled bale press according to claim 11, characterised in that the scraper (21, 36) is mounted, via at least one vertical elongate slot (34), on a flange of the cross-piece member (18) facing the conveyor roller (8) so as to be adjustable in the vertical direction.

13. Rolled bale press according to claims 11 and 12, characterised by spacer plates (39), which are insertable between a mounting flange (16) of the scraper (21, 36) and the flange of the cross-piece member (18).

14. Rolled bale press according to claim 13, characterised in that the spacer plates (39) have a wedge-shaped cross-section.

15. Rolled bale press according to claim 11, characterised in that the cross-piece member (18) has a scraping edge (20) on a flange (19) facing the rolled bale (4), said edge defining a scraping gap (Y) with the circumference of the press roller (9).

16. Rolled bale press according to claim 15, characterised in that the cross-piece member (18) is fixed to end mounting plates (37), in which vertical or inclinedly extending elongate slots (38) are provided for the adjustment of the scraping gap.

17. Rolled bale press according to at least one of claims 1 to 16, characterised in that the scraping face (11) is provided with a coating (4), which is conducive to sliding, e.g. formed from PTFE.

## Revendications

1. Presse à balles rondes pour produit à tiges, avec une chambre de pressage (3), avec un conduit d'amené (6) conduisant dans la chambre de pressage, avec, dans le conduit d'amené, un rouleau transporteur (8) portant des organes entraîneurs (30) et commandé en étant mû d'en dessous, avec, entre le rouleau transporteur (8) et la chambre de pressage (3), des couteaux (10) pénétrant par le bas dans le domaine de rotation des organes entraîneurs (30), et avec un dispositif racleur (A) supporté au-dessus des couteaux (10), et qui comporte, tournée vers la chambre de pressage (3), une surface racleuse (11) inclinée obliquement de bas en haut vers la chambre de pressage et contenant des fentes de passage (35) pour les organes entraîneurs (30) et les couteaux (10) et qui pénètre d'en haut dans le domaine de rotation des organes entraîneurs (30), caractérisée en ce que la portion extrême supérieure (13) de la surface racleuse (11) s'étend dans la chambre de pressage (3) avec formation d'une fente de délivrance (33) s'ouvrant en angle aigu dans le sens d'enroulement de la balle ronde (4) jusqu'à la périphérie (4a) de la balle ronde (4) enroulée dans la chambre de pressage (3).

2. Presse à balle ronde selon la revendication 1, caractérisée en ce que la surface racleuse (11) est courbée concavement de bas en haut en étant orientée vers la chambre de pressage (3) et en ce que le rayon de courbure croit de bas en haut.

3. Presse à balle ronde selon les revendications 1 et 2, caractérisée en ce que chaque organe entraîneur (30) comporte un bord (31) situé en avant dans le sens de rotation du rouleau transporteur (8) et en ce que la courbure de la surface racleuse (11) et l'allure du bord entraîneur (31) relativement à l'axe de rotation du rouleau transporteur (8) sont adaptées entre elles de telle façon qu'au point d'entrée de la pointe de l'organe entraîneur (30) dans la fente de passage (35), une tangente au bord entraîneur (31) forme un angle d'au moins 90° avec une tangente à la surface racleuse (11).

4. Presse à balle ronde selon la revendication 1, caractérisée en ce que la distance radiale du tranchant (27) de chaque couteau (10) à l'axe de rotation du rouleau transporteur (8) reste constante ou de préférence augmente progressivement au moins jusqu'au point d'entrée des couteaux (10) dans la fente de passage (35).

5. Presse à balle ronde selon la revendication 1, caractérisée en ce que la portion extrême inférieure (12) de la surface racleuse (11) est recouverte par le contour périphérique du rouleau transporteur (8) dans le sens d'amenée du produit récolté (E).

6. Presse à balle ronde selon la revendication 1, caractérisée en ce qu'il est prévu une surface libre (14) se raccordant à la partie extrême supérieure (13) de la surface racleuse (11) et se retirant de la périphérie (4a) de la balle ronde (4).

7. Presse à balle ronde selon l'une des revendications 1 à 6, caractérisée en ce que dans chaque fente de passage (35) dans la partie extrême supérieure (13) de la surface racleuse (11) est prévu un élargissement en forme de coin (45) s'ouvrant à l'encontre du sens d'enroulement (34).

8. Presse à balle ronde selon au moins l'une des revendications 1 à 7, caractérisée en ce que la surface racleuse (11) est formée par les surfaces dorsales de plusieurs racleurs (21) placés les uns à côté des autres avec des intervalles d'écartement définissant les fentes de passage (35).

9. Presse à balle ronde selon au moins l'une des revendications 1 à 8, caractérisée en ce que la surface racleuse (11) est formée par la surface dorsale d'un racleur en une seule pièce (36) contenant les fentes de passage (35).

10. Presse à balle ronde selon au moins l'une des revendications 1 à 9, caractérisée en ce que sur le racleur (21, 36) est prévue au moins une nervure verticale (23) sur la surface avant (26) entre deux fentes de passage (35) et en ce que la nervure (23) s'étend, en tant que déflecteur de produit à tiges, sur la hauteur de la surface racleuse (11) et comporte un bord déflecteur (25) qui s'étend approximativement radialement vers l'axe du rouleau transporteur (8) jusqu'approximativement à la moitié de la hauteur radiale de chaque organe entraîneur (30) en direction du rouleau transporteur (8).

11. Presse à balle ronde selon au moins l'une des revendications 1 à 10, dans laquelle dans la chambre de pressage au-dessus du dispositif racleur est prévu au moins un rouleau compresseur appliqué contre la périphérie de la balle ronde, caractérisée en ce que le racleur (21, 36) est fixé à une traverse (18) située en haut et voisine du rouleau compresseur (9).

12. Presse à balle ronde selon la revendication 11, caractérisée en ce que le racleur (21, 36) est fixé de façon déplacable dans la direction de hauteur par l'intermédiaire d'un trou oblong vertical (34) à une branche, tournée vers le rouleau transporteur, de la traverse (18).

13. Presse à balle ronde selon les revendications 11 et 12, caractérisée par des tôles d'écartement (39) insérables entre une aile de fixation (16) des racleurs (21, 36) et la branche de la traverse (18).

14. Presse à balle ronde selon la revendication 13, caractérisée en ce que les tôles d'écartement (39) possèdent une section transversale en forme de coin.

15. Presse à balle ronde selon la revendication 11, caractérisée en ce que la traverse (18) comporte, sur une aile (19) tournée vers la balle ronde (4), un bord racleur (20) qui délimite un intervalle de raclage (Y) avec la périphérie du rouleau compresseur (9).

16. Presse à balle ronde selon la revendication 15, caractérisée en ce que la traverse (18) est fixée à des plaques porteuses (37) situées du côté extrême, dans lesquelles sont prévus des trous oblongs verticaux ou s'étendant obliquement (38) pour le réglage de l'intervalle de raclage.

17. Presse à balle ronde selon au moins l'une des revendications 1 à 16, caractérisée en ce que la surface racleuse (11) porte une couche (40) favorisant le glissement, par exemple en PTFE.
